Europäisches Patentamt

(19) European Patent Office

Office européen des brevets

(11) Numéro de publication: **0 135 420**
**A1**

(12) **DEMANDE DE BREVET EUROPEEN**

(21) Numéro de dépôt: **84401562.8**

(22) Date de dépôt: **25.07.84**

(51) Int. Cl.⁴: **B 62 K 21/16**
**B 62 K 21/22**

(30) Priorité: **27.07.83 FR 8312618**

(43) Date de publication de la demande:
**27.03.85 Bulletin 85/13**

(84) Etats contractants désignés:
**AT BE CH DE FR GB IT LI LU NL SE**

(71) Demandeur: **MANUFACTURE INDUSTRIELLE DE CYCLES ET MOTOCYCLES MICMO**
**Rue M. Brunelière**
**F-44270 Machecoul(FR)**

(72) Inventeur: **Menard, Maurice**
**15, rue Marat**
**F-78210 Saint-Cyr L'Ecole(FR)**

(72) Inventeur: **Redois, Joel**
**Le Grand Etang**
**F-44270 Machecoul(FR)**

(74) Mandataire: **Phélip, Bruno et al,**
**c/o Cabinet Harlé & Phélip 21, rue de la Rochefoucauld**
**F-75009 Paris(FR)**

(54) Ensemble guidon/pivot de fourche d'un cycle à profil aérodynamique.

(57) Le cintre du guidon 1 est constitué d'une âme intérieure 1a et d'un carénage extérieur 1b dont la section droite s'apparente au profil d'une aile d'avion dans laquelle se logent les câbles de commande de freins, la forme du cintre dans le plan frontal pouvant être horizontale, ou en "Vé" infléchi vers le bas ou vers le haut; le cintre est fixé d'une façon démontable sur une potence 2, elle-même directement fixée sur le pivot de fourche 5 avec une possibilité de réglage en hauteur, entre deux roulements à aiguilles assurant le guidage en rotation du guidon, le débattement angulaire de celui-ci étant délimité par une fenêtre 15 usinée sur la paroi latérale avant de la douille de fourche 8.

FIG.1

Croydon Printing Company Ltd.

0135420

Ensemble guidon/pivot de fourche d'un cycle à profil
aérodynamique

La présente invention concerne les éléments
constitutifs d'un cycle et plus particulièrement
d'une bicyclette de compétition.

Les essais effectués en soufflerie indiquent
que l'ensemble d'un cycle de course classique et
de son coureur absorbent une puissance de l'ordre
de 600 watts à la vitesse de 50 km à l'heure, le
tiers de cette puissance, soit 200 watts étant dû
au cycle seul. Les différents perfectionnements
apportés aux parties constitutives et accessoires
du cycle pour réduire cette puissance absorbée et
ayant porté principalement sur le profilage du
cadre, de la fourche, des accessoires tels que le
guidon, les leviers de freins, le logement interne
des gaines et câbles de commande de freins et de
changement de vitesse, etc... ont déjà permis de
réduire de 50 % cette puissance. L'ensemble de ces
perfectionnements ne modifiaient en rien la structure, le montage et la position classique des
éléments concernés. C'est ainsi que le guidon,
quelle que soit sa forme, était fixé au moyen d'une
potence pénétrant dans le pivot ou tube fileté de
la fourche, pour donner un ensemble communément
désigné par "guidon bas".

Dans le domaine spécifique, des tentatives
de record et dans celui des courses sur piste,il
a été conçu et mis en oeuvre des procédés consistant à souder ou fixer directement le guidon sur
la tête de fourche. Dans ce cas, la forme du cintre
diffère un peu, en s'apparentant à la forme de
cornes de vache. Enfin, la forme même donnée aux
sections des tubes entrant dans la composition du

7639 EU

cadre et de la fourche avant, en matière d'aérodynamisme a largement contribué à améliorer la pénétration du cycle dans l'air.

L'invention vise à améliorer d'une façon globale, le rendement aérodynamique du cycle, tout en améliorant la rigidité du sous-ensemble guidon/pivot de fourche, conférant à celui-ci une plus grande portée latérale alliée à un meilleur guidage ; l'invention permet d'autre part de placer le guidon dans la zone d'écoulement d'air la plus favorable, la configuration dudit guidon améliorant l'écoulement aérodynamique du cycle. Enfin, le mode de montage du guidon permet d'obtenir la meilleure position du cycliste en fonction de sa morphologie.

L'ensemble guidon /pivot de fourche objet de l'invention est caractérisé en ce que :

- la potence est fixée directement sur le pivot de fourche sensiblement à mi-hauteur de la douille de direction, à l'aide d'une liaison démontable.

- le guidage en rotation de la fourche est assuré à l'aide de deux paliers de roulement à aiguilles entre lesquels s'inscrit l'embase de la potence.

- la rotation de la fourche est assurée dans la limite du débattement de la potence, dans une fenêtre usinée dans la douille de direction.

- la section droite des branches constituant le cintre du guidon est en forme d'aile d'avion; elle permet le passage interne des câbles de transmission des freins.

- la forme frontale du cintre est une forme en vé positif ou négatif; sa fixation d'une façon démontable sur la potence permet le choix du cintre en fonction de la morphologie du cycliste.

Un objet de l'invention est donc de réaliser un ensemble guidon/pivot de fourche de cycle, caractérisé en ce qu'il est composé dans sa partie centrale d'un cintre, constitué d'une part, d'une âme intérieure assurant la résistance mécanique nécessaire à la flexion et aux efforts tranchants dans la zone d'assemblage du cintre avec la potence et, d'autre part, d'un carénage extérieur obtenu par formage présentant une section creuse de profil s'apparentant à celui d'une aile d'avion et disposé comme tel, le bord d'attaque vers l'avant du cycle, et dans laquelle section creuse s'inscrivent l'âme, ainsi que les câbles et/ou les gaines de commande des dispositifs de freinage et de changement de vitesse et que, sur les bords latéraux du cintre sont fixés , par exemple par soudage, des éléments tubulaires incurvés se prolongeant vers le haut de façon à former poignées, et dont les axes respectifs sont disposés sensiblement dans des plans perpendiculaires au plan du cintre.

Les dessins annexés illustrent un mode de réalisation et d'assemblage d'un ensemble guidon/pivot de fourche conforme à la présente invention. Ceux-ci représentent :

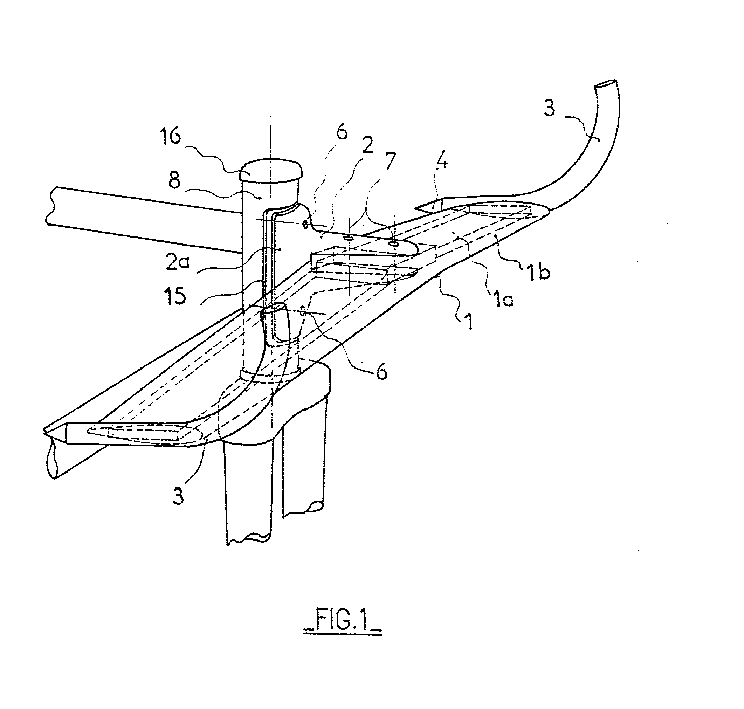

- en figure 1, une vue en perspective cavalière de l'ensemble,

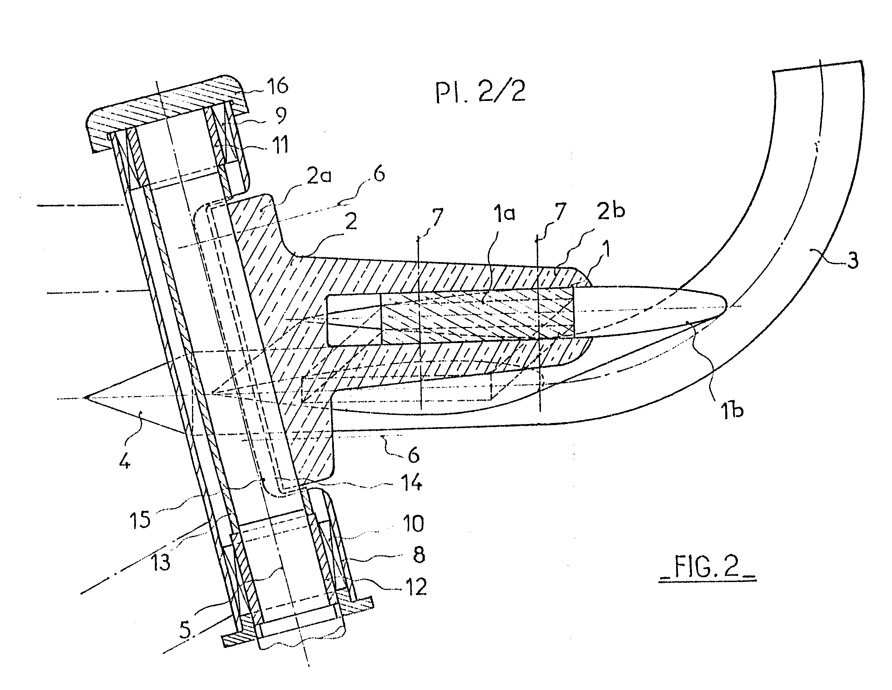

- en figure 2, une vue en élévation-coupe de ce même ensemble.

Tel que représenté, le guidon est composé dans sa partie centrale d'un cintre 1 constitué d'une part, d'une âme intérieure la assurant au cintre la résistance mécanique nécessaire lui permettant, entre autre, une bonne tenue à la flexion et aux efforts tranchants dans la zone d'assemblage du cintre dans la potence 2 et, d'autre part, d'un carénage extérieur lb en tôle métallique d'acier inoxydable par exemple, présentant une section creuse dont le profil s'apparente à celui d'une aile d'avion et disposé comme tel, le bord d'attaque vers l'avant du cycle, le bord de fuite vers l'arrière de celui-ci, et dans laquelle section creuse s'inscrivent celle de l'âme la, ainsi que les câbles et/ou les gaines de commande des dispositifs de freinage et de changement de vitesse. A chaque extrémité du cintre sont soudées les parties coudées en forme de "cornes de vache" formant poignées 3 dont l'extrémité arrière se termine par un embout conique 4, en matériau semi élastique, évitant, selon un principe connu, les risques de blessures, en cas de chute, la forme donnée à cet embout étant dictée par un souci d'aérodynamisme. Dans le plan frontal, le cintre 1 peut être soit horizontal, soit en forme de "vé" positif ou négatif, c'est-à-dire infléchi vers le bas ou vers le haut.

La potence 2, réalisée en alliage léger, est constituée d'une embase 2a s'apparentant à un onglet cylindrique dont la face de liaison se conjugue avec la surface latérale du pivot de fourche 5 sur laquelle elle se fixe à l'aide de deux vis 6 ; sur cette embase est implantée une chape 2b dont la forme des branches s'apparente à celle d'un bec de canard, entre lesquelles branches s'inscrivent en épaisseur, l'âme la et le carénage extérieur lb du cintre, l'assemblage de l'ensemble étant réalisé à l'aide de vis 7 rendant la liaison démontable. La forme donnée aux branches de la chape et leur raccordement sur l'embase réalisent un nez de carénage de la douille de direction.

Le pivotement de la fourche dans la douille de direction 8 est assuré par l'intermédiaire d'un roulement à aiguilles de tête 9 et de pied 10, à bague extérieure, le roulement des aiguilles s'effectuant respectivement sur des bagues intérieures rapportées 11 et 12, maintenues à écartement sur le pivot de fourche au moyen d'une bague entretoise 13, cette dernière comportant une découpure 14 dans laquelle s'inscrit le périmètre de l'embase. Le débattement angulaire maximum de la potence est délimité par une fenêtre 15 prévue sur la paroi latérale avant de la douille de fourche 8. L'extrémité supérieure de celui-ci est foncé par un bouchon 16.

L'invention ne se limite pas au mode de réalisation décrit : elle embrasse toutes les variantes possibles à condition que celles-ci ne soient pas en contradiction avec l'objet de chacune des revendications annexées à la présente description. C'est ainsi que le matériau utilisé pour la réalisation du carénage peut être de toute nature, métal, matière plastique, fibre de verre ou autre. D'autre part, la fixation de la potence sur le pivot de fourche peut laisser une liberté de translation verticale pour régler la position en hauteur du guidon ; c'est ainsi que, par exemple, les vis de fixation 6 s'implantant dans le pivot de fourche peuvent traverser l'embase de la potence dans des trous oblongs ou boutonnière exécutés dans celle-ci. Une telle possibilité de réglage associée à la faculté de choix du profil frontal du cintre, permet d'obtenir un ensemble

0135420

adapté à la morphologie du cycliste.

L'invention peut s'appliquer à tous les ensembles guidon-pivot de fourche équipant les cycles et plus particulièrement les cycles de compétition sur route et sur piste.

REVENDICATIONS

1. Ensemble guidon/pivot de fourche de cycle, caractérisé en ce qu'il est composé dans sa partie centrale d'un cintre (1), constitué d'une part, d'une âme intérieure (1a) assurant la résistance mécanique nécessaire à la flexion et aux efforts tranchants dans la zone d'assemblage du cintre avec la potence (2) et d'autre part, d'un carénage extérieur (1b) obtenu par formage présentant une section creuse de profil s'apparentant à celui d'une aile d'avion et disposé comme tel, le bord d'attaque vers l'avant du cycle, et dans laquelle section creuse s'inscrivent l'âme (1a) ainsi que les câbles et/ou les gaines de commande des dispositifs de freinage et de changement de vitesse et que, sur les bords latéraux du cintre (1), sont fixées par exemple par soudage, des éléments tubulaires incurvés (3) se prolongeant vers le haut, de façon à former poignées, et dont les axes respectifs sont disposés sensiblement dans des plans perpendiculaires au plan du cintre (1).

2. Ensemble guidon/pivot de fourche selon la revendication 1, caractérisé en ce que dans le plan frontal, le cintre peut être soit horizontal, soit en forme de "Vé" positif ou négatif, c'est-à-dire, infléchi vers le bas ou vers le haut.

3. Ensemble guidon/pivot de fourche selon l'une des revendications 1 ou 2, caractérisé en ce que la potence (2) réalisée en alliage léger est constituée d'une embase (2a) s'apparentant à un onglet cylindrique dont la face de liaison se conjugue avec la surface latérale du pivot de fourche (5) sur lequel elle se fixe directement à l'aide de vis (6) et sur laquelle embase est implantée une chape (2b) dont la forme des branches s'apparente à celle d'un bec de canard, entre lesquelles branches s'inscrivent en épaiseur l'âme (1a) et le carénage extérieur (1b) du cintre, l'assemblage de l'ensemble s'effectuant à l'aide de vis (7) rendant la liaison démontable.

4. Ensemble guidon/pivot de fourche selon la revendication 3, caractérisé en ce que la fixation de la potence (2) sur le pivot de fourche (5) autorise une liberté de translation verticale, afin de permettre le réglage de position en hauteur du cintre en rapport avec la morphologie du cycliste.

5. Ensemble guidon/pivot de fourche selon l'une quelconque des revendications 1 à 4, caractérisé en ce que le pivotement de la fourche dans la douille de direction (8) est assuré par l'intermédiaire de roulements à aiguilles, de tête (9) et de pied (10), à bague extérieure, le roulement des aiguilles s'effectuant respectivement sur des bagues intérieures rapportées (11 et 12) maintenues à écartement sur le pivot de fourche au moyen d'une bague entretoise (13) comportant une découpure (14) dans le périmètre de laquelle s'inscrit l'embase (2a) de la potence.

6. Ensemble guidon/pivot de fourche selon l'une quelconque des revendications 1 à 5, caractérisé en ce que le débattement angulaire de la potence est délimité par une fenêtre (15) usinée sur la paroi latérale avant de la douille de fourche (8).

Pl.1/2

_FIG.1_

Pl. 2/2

FIG. 2

0135420

**RAPPORT DE RECHERCHE EUROPEENNE**

0135420
Numéro de la demande

EP 84 40 1562

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| X | EP-A-0 035 855 (K. SHIMANO) * page 2, ligne 12 - page 3, ligne 20; revendications; figures * | 1 | B 62 K 21/16 B 62 K 21/22 |
| A | | 2 | |
| A | US-A-2 004 089 (B.J. ANDERSON) * en entier * | 1,2 | |
| A | DE-C- 427 937 (F. BERG) * en entier * | 1,2 | |
| A | DE-A-3 132 099 (F. SPEKNER) * figures; revendications * | 1,2 | |
| A | GB-A- 875 457 (RADIO STEEL & MFG. CO.) * figures * | 5,6 | |
| A | FR-A-2 379 423 (A.C. RESSORT) * figures * | 4 | |
| A | US-A-1 415 115 (C.G. PULLIN) * figures * | 5 | |

DOMAINES TECHNIQUES RECHERCHES (Int. Cl.4)

B 62 K

Le présent rapport de recherche a été établi pour toutes les revendications

| Lieu de la recherche | Date d'achèvement de la recherche | Examinateur |
|---|---|---|
| LA HAYE | 30-10-1984 | FRANKS B.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant